# EUROPÄISCHE PATENTSCHRIFT

(11) **EP 3 551 390 B1**
(45) Veröffentlichungstag und Bekanntmachung des Hinweises auf die Patenterteilung: **10.05.2023**
(21) Anmeldenummer: 17797321.1
(22) Anmeldetag: 09.11.2017
(51) Int. Cl.: B25D 17/20, B25D 11/06, H02K 9/06, H02K 33/12, H02K 3/24

(54) **WERKZEUGMASCHINE**
TOOL
OUTIL

(30) Priorität: 09.12.2016 EP 16203113
(43) Veröffentlichungstag der Anmeldung: 16.10.2019
(73) Patentinhaber: Hilti Aktiengesellschaft, 9494 Schaan (LI)
(72) Erfinder: ARTMANN, Konrad, 86938 Schondorf (DE); SCHAEFER, Thomas, 86836 Obermeitingen (DE); HARTMANN, Markus, 87665 Mauerstetten (DE); DAAM, Norbert, 86944 Oberdiessen (DE)
(74) Vertreter: Hilti Aktiengesellschaft Corporate Intellectual Property
(86) Internationale Anmeldenummer: PCT/EP2017/078697
(87) Internationale Veröffentlichungsnummer: WO 2018/103988

(56) Entgegenhaltungen:
- WO-A2-2010/117127
- GB-A- 1 378 987
- US-A- 469 441
- US-A- 1 920 673
- US-A- 2 248 110
- US-A- 2 861 778
- US-A- 3 149 255

## Beschreibung

Die vorliegende Erfindung betrifft eine Werkzeugmaschine gemäß dem Oberbegriff des Anspruchs 1, insbesondere Bohr- und/oder Meißelhammer, enthaltend ein Schlagwerk mit einem Schlagkörper zum Erzeugen eines Schlagimpulses auf ein Werkzeug, der mit Hilfe eines Magnetfeldes zum Erzeugen des Schlagimpulses entlang einer Längsachse reversibel verschiebbar ist und wenigstens eine erste und zweite Spuleneinrichtung zum Erzeugen des Magnetfeldes. Eine solche Werkzeugmaschine ist aus der US 3 149 255 A bekannt.

In der Bohrmontage, im Installationsbereich, in der Abbautechnik usw. werden zum Bohren und auch zum Meißeln meist elektrisch betreibbare, handgeführte Werkzeugmaschinen eingesetzt. Die handgeführten Bohr- und/oder Meißelhämmer weisen üblicherweise einen in einem Gerätegehäuse angeordneten Antrieb für ein in eine Werkzeugaufnahme eingespanntes Bohr- bzw. Meißelwerkzeug auf. Zur Verbesserung der Abbauleistung beim Bohren und insbesondere zum Meißeln sind die Geräte mit einem Schlagwerk ausgestattet, das im Betrieb axial wirkende Schläge bzw. Schlagimpulse erzeugt, die auf das in die Werkzeugaufnahme eingespannte Werkzeug abgegeben werden. Zur Erzeugung von periodischen axialen Schlägen sind aus dem Stand der Technik verschiedene Lösungen bekannt.

Neben im Wesentlichen mechanisch erregten Schlagwerken sind im Stand der Technik auch elektromagnetische Schlagwerke vorgeschlagen worden, bei denen ein magnetisierbarer Schlagkolben in einem Magnetfeld im Inneren einer Spule geführt ist. Aus der US-A-4,553,074 ist beispielsweise ein elektromagnetisches Schlagwerk bekannt, bei dem ein Schlagkolben im elektrischen Feld im Inneren einer zylindrischen Statorspule geführt ist. Sobald der Spule ein Stromimpuls zugeführt wird, wird der Schlagkolben in Richtung des in die Werkzeugaufnahme eingespannten Werkzeugs beschleunigt. Nach der Stoßabgabe prallt der Schlagkolben zurück und wird beispielsweise durch eine Rückholfeder in die Gegenrichtung bewegt. Für die Rückholung des Schlagkolbens kann anstelle einer Rückholfeder beispielsweise auch ein umgekehrt gepoltes magnetisches Feld herangezogen werden. Danach beginnt der Schlagvorgang von neuem.

Problematisch an den vorstehend erwähnten elektromagnetischen Schlagwerken gemäß dem Stand der Technik ist oftmals eine übermäßige Wärmeentwicklung durch die Spulen, die unter anderem zu einer Beschädigung und/oder ein Ausfall eines Bestandteils oder des gesamten Schlagwerks führen kann.

Aufgabe der vorliegenden Erfindung ist es daher, eine Werkzeugmaschine, insbesondere Bohr-und/oder Meißelhammer, enthaltend ein Schlagwerk mit einem Schlagkörper zum Erzeugen eines Schlagimpulses auf ein Werkzeug bereitzustellen, mit der das vorstehend beschriebene Problem gelöst und insbesondere die Wahrscheinlichkeit einer Beschädigung und/oder eines Ausfalls eines Bestandteils oder des gesamten Schlagwerks verringert werden kann.

Die Aufgabe wird gelöst durch den Gegenstand des unabhängigen Anspruchs 1. Vorteilhafte Ausführungsformen des erfindungsgemäßen Gegenstands sind in den abhängigen Ansprüchen enthalten.

Die Aufgabe wird gelöst durch das Bereitstellen einer Werkzeugmaschine, insbesondere Bohr-und/oder Meißelhammer, enthaltend ein Schlagwerk mit einem Schlagkörper zum Erzeugen eines Schlagimpulses auf ein Werkzeug, der mit Hilfe eines Magnetfeldes zum Erzeugen des Schlagimpulses entlang einer Längsachse reversibel verschiebbar ist und wenigstens eine erste und zweite Spuleneinrichtung zum Erzeugen des Magnetfeldes.

Erfindungsgemäß ist für die Werkzeugmaschine vorgesehen, dass jede Spuleneinrichtung wenigstens einen ersten Spulenring mit einem ersten Radius und einen zweiten Spulenring mit einem zweiten Radius enthält, wobei der erste Radius des ersten Spulenrings größer ist als der zweite Radius des zweiten Spulenrings, sodass zwischen dem wenigstens ersten und zweiten Spulenring mindestens teilweise eine Aussparung vorgesehen ist, durch die ein Fluid, insbesondere ein Luftstrom, zum Kühlen der Spuleneinrichtung strömen kann.

Hierdurch wird ermöglicht, dass Kühlluft zwischen den einzelnen Spulenring hindurchströmen kann, um hierdurch der Wärmebildung an den Spulen und insgesamt an der Spuleneinrichtung entgegenzuwirken. Durch eine reduzierte Wärmebildung an der Spuleneinrichtung kann die Wahrscheinlichkeit einer Beschädigung und/oder eines Ausfalls eines Bestandteils oder des gesamten Schlagwerks verringert werden. Des Weiteren kann durch die Unterteilung der Spuleneinrichtung in mehrere Spulenringe die einzelne Größe bzw. Höhe der wärmeerzeugenden Spulenwicklung reduziert werden.

Jeder Spulenring ist Bestandteil einer oder mehrerer Wicklungen eines elektrisch leitfähigen Stromleiters der Spuleneinrichtung zur Erzeugung des Magnetfeldes. In jedem Spulenring kann dabei eine eigene Wickelspule, von den anderen Wicklungen getrennte, enthalten.

Gemäß einer vorteilhaften Ausführungsform der vorliegenden Erfindung kann vorgesehen sein, dass die Spuleneinrichtung mehr als ein erster und zweiter Spulenring mit entsprechenden wenigstens teilweise zwischen den einzelnen Spulenringen vorhandenen Aussparungen enthält. Hierdurch kann die Spuleneinrichtung weiter in einzelne Spulenringe unterteilt werden, sodass entsprechend auch weitere Aussparungen zur Kühlung der Spuleneinrichtung vorgesehen werden können. Die Ausgestaltung der Spuleneinrichtung mit mehr als einem ersten und zweiten Spulenring ist insbesondere bei Spulen mit größeren Durchmessern und einer hohen Anzahl an Wicklungen vorteilhaft. Je höher die Anzahl an Wicklungen von elektrisch leitfähigen Stromleitern und je größer die Anzahl an übereinanderliegenden Stromleitern, desto größer ist die Wärmebildung in bzw. an den Spulen.

Es kann gemäß einer weiteren Ausführungsform weiterhin als vorteilhaft angesehen werden, dass der wenigstens erste und zweite Spulenring in einer vertikalen Ebene angeordnet ist. Hierdurch ist es möglich die Gesamtlänge der Spuleneinrichtung zu verkürzen und somit Platz im Inneren der Werkzeugmaschine zu sparen.

Entsprechend einer weiteren vorteilhaften Ausführungsform kann vorgesehen sein, dass jeder Spulenring maximal zwei bis vierzehn Wicklungslagen, vorzugsweise sieben oder acht Wicklungslagen, eines Stromleiters enthält. Der Stromleiter kann als Draht ausgestaltet sein. Es hat sich gezeigt, dass durch die Limitierung der Anzahl an Wicklungslagen eines Stromleiters auf zwei bis zwölf Wicklungslagen eine zu hohe Wärmebildung in bzw. an den Spulen verhindert werden kann, sodass durch die zwischen den Spulenringen vorgesehene Aussparung eine ausreichende Kühlung erzeugt werden kann.

Gemäß der vorliegenden Erfindung ist vorgesehen, dass die einzelnen Spulenringe so zueinander angeordnet sind, dass ein Abstand zwischen einem oberen Ende eines obersten Spulenrings und einem unteren Ende eines untersten Spulenrings größer ist als die Summe der ersten Höhe des obersten Spulenrings und der zweiten Höhe des untersten Spulenrings. Hierdurch kann ein nahezu optimales Verhältnis zwischen der Höhe des einzelnen Spulenrings und der Aussparung zur Kühlung der Spulenringe erzeugt werden.

Entsprechend einer weiteren vorteilhaften Ausführungsform kann vorgesehen sein, dass die Aussparung zwischen dem wenigstens ersten und zweiten Spulenring eine Höhe von 2 bis 10 mm aufweist. Hierdurch kann eine nahezu optimale Höhe der Aussparung zwischen den einzelnen Spulenringen in Bezug auf die Kühlwirkung erreicht werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: eine schematische Darstellung einer ersten und zweiten Spuleneinrichtung mit jeweils einem ersten und zweiten Spulenring als Bestandteil eines Schlagwerks einer Werkzeugmaschine;
- Fig. 2: eine Schnittansicht durch eine Ausführungsform einer erfindungsgemäßen Werkzeugmaschine mit einem Schlagwerk und einer ersten sowie zweiten Spuleneinrichtung gemäß einer ersten Ausführungsform;
- Fig. 3: eine Schnittansicht durch eine Ausführungsform der erfindungsgemäßen Werkzeugmaschine mit einem Schlagwerk und der ersten sowie zweiten Spuleneinrichtung gemäß einer weiteren Ausführungsform;
- Fig. 4: eine Schnittansicht entlang dem Schnitt C - C in Fig. 1 durch eine erste und zweite Spuleneinrichtung gemäß der ersten Ausführungsform;
- Fig. 5: eine Schnittansicht entlang dem Schnitt C - C in Fig. 1 durch die erste und zweite Spuleneinrichtung gemäß einer weiteren Ausführungsform;
- Fig. 6: eine Schnittansicht entlang dem Schnitt C - C in Fig. 1 durch die erste und zweite Spuleneinrichtung gemäß einer weiteren Ausführungsform;
- Fig. 7: eine perspektivische Ansicht auf die Spuleneinrichtung mit einem ersten und zweiten Spulenring;

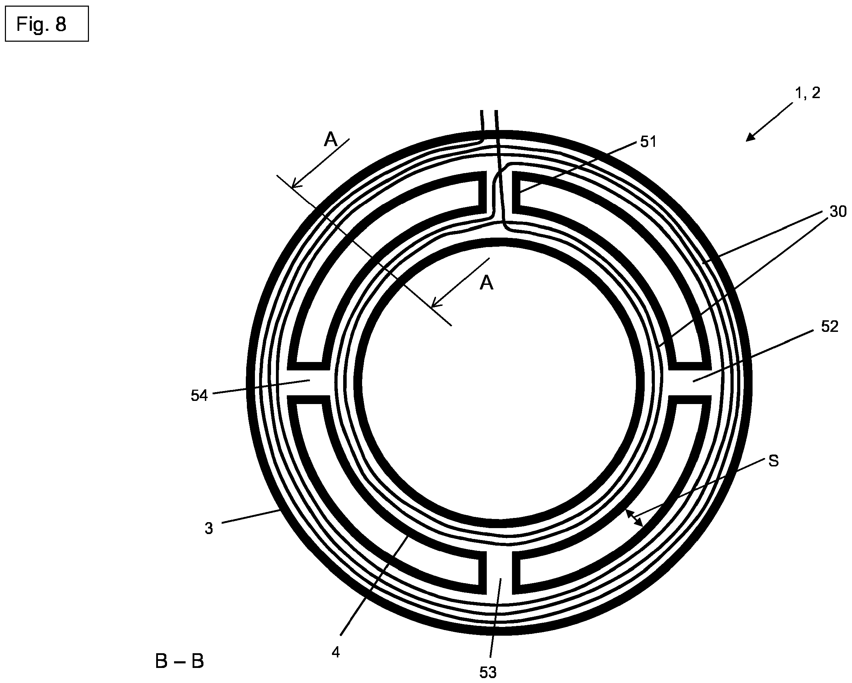

- Fig. 8: eine Schnittansicht durch die Spuleneinrichtung mit dem ersten und zweiten Spulenring entlang dem Schnitt B - B in Fig. 7; und
- Fig. 9: eine Schnittansicht durch die Spuleneinrichtung mit dem ersten und zweiten Spulenring entlang dem Schnitt A - A in Fig. 7.

### Ausführungsbeispiele:

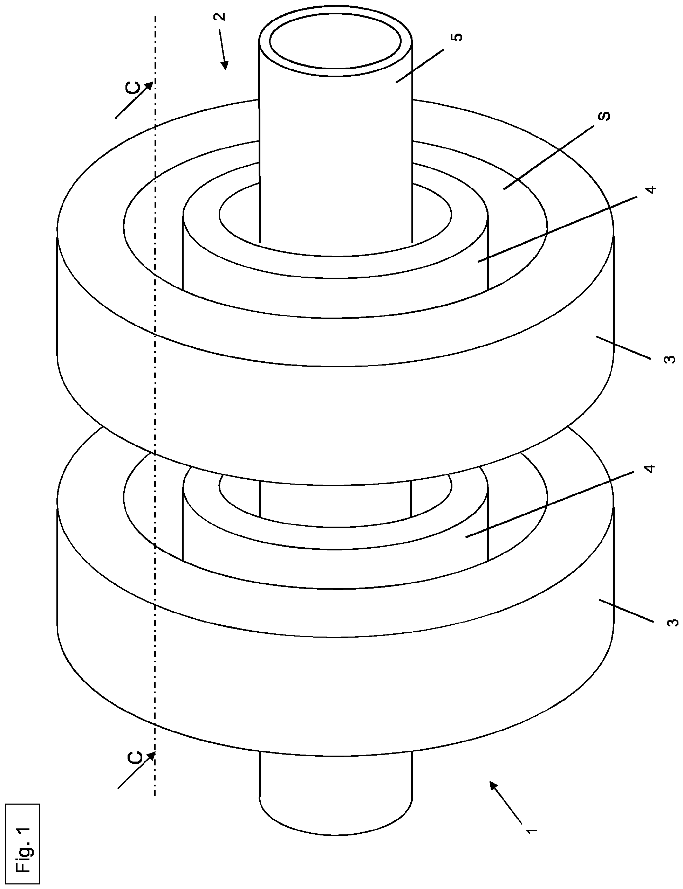

Figur 1 zeigt eine erste Spuleneinrichtung 1 und eine zweite Spuleneinrichtung 2. Die erste Spuleneinrichtung 1 enthält einen ersten Spulenring 3 sowie einen zweiten Spulenring 4. Die Spulenringe 3, 4 sind um eine Hülse 5 positioniert. Sowohl die erste als auch die zweite Spuleneinrichtung 1, 2 ist Bestandteile eines Schlagwerks 12 einer Werkzeugmaschine 7.

Die Werkzeugmaschine 7 ist in Form eines Meißelhammers ausgestaltet. Die als Meißelhammer ausgestaltete Werkzeugmaschine 7 enthält im Wesentlichen ein Gerätegehäuse 8, einen Handgriff 9 und eine Werkzeugaufnahme 10 zur Aufnahme eines Werkzeugs 11, beispielsweise einen Bohrer oder Meissel.

Der Handgriff 9 ist in Richtung N an einem hinteren Ende mit dem Gerätegehäuse 8 verbunden und weist einen Betätigungsschalter auf, mit dem die als Meißelhammer ausgestaltete Werkzeugmaschine 7 in Betrieb gesetzt werden kann. Der Betätigungsschalter ist in den Figuren nicht dargestellt. Zur Energieversorgung der elektrisch betriebenen Werkzeugmaschine 7 ist dieses über ein Anschlusskabel mit einer Stromquelle, beispielsweise eine Steckdose, verbindbar. Das Anschlusskabel, die Steckdose und die Stromquelle sind in den Figuren nicht dargestellt.

Des Weiteren ist innerhalb des Gerätegehäuses 8 ein Schlagwerk 12 vorgesehen, das vorzugsweise koaxial zu der Werkzeugaufnahme 10 und dem darin positionierten Werkzeug 11 angeordnet ist. Das Werkzeug 11 ist als Meißel ausgestaltet.

Das Schlagwerk 12 umfasst dabei im Wesentlichen die erste Spuleneinrichtung 1 und zweite Spuleneinrichtung 2, die Hülse 5 sowie einen Schlagkörper 13. Der Schlagkörper 13 ist im Inneren der Hülse 5 positioniert und kann periodisch entlang der Achs R des Schlagwerks 12 in Richtung M oder N reversibel hin- und her bewegt werden. An dem in Richtung N gesehenen hinteren Ende der Hülse 5 ist eine Feder 14 positioniert. Die Feder 14 ist in Form einer Spiralfeder ausgestaltet. Es ist jedoch auch möglich, dass die Feder 14 in Form einer Luftfeder ausgestaltet ist. Bei der Vorwärtsbewegung in Richtung M bzw. in Richtung des in die Werkzeugaufnahme 10 eingespannten Werkzeugs 11 schlägt der Schlagkörper 13 gegen das rückwärtige Ende des Werkzeugs 11 bzw. eines Zwischendöpperelements 15. Hierbei gibt der Schlagkörper 13 einen Großteil seiner kinetischen Energie impulsgartig an das Werkzeug 11 ab. Die impulsartig auf das Werkzeug 11 übertragene kinetische Energie kann zur Bearbeitung (Meißeln) eines mineralischen Werkstoffs (z.B. Gestein) verwendet werden. Der mineralische Werkstoff ist in den Figuren nicht gezeigt. Die Feder 14 im hinteren Teil der Hülse 5 dient zum Abbremsen und Zurückführen des Schlagkörpers 13, wenn sich der Schlagkörper 13 in Richtung N bewegt hat und wieder in Richtung M bewegt werden soll.

Das in den Figuren angedeutete Schlagwerk 12 basiert auf dem Prinzip polarisierter Reluktanzen und enthält im Wesentlichen eine erste und zweite Spuleneinrichtung 1, 2. Mit Hilfe der beiden Spuleneinrichtungen 1, 2 kann ein Magnetfeld erzeugt werden, in dem der Schlagkörper 13 periodisch axial in Richtung M und N reversibel verschiebbar ist.

In Richtung N ist hinter der ersten und zweiten Spuleneinrichtung 1, 2 ein Lüfter 16 angeordnet. Der Lüfter 16 enthält ein Lüfterrad 17, welches sich um die Hülse 5 drehen kann und so eine Luftströmung L erzeugt. Die von dem Lüfterrad 17 erzeugte Luftströmung L saugt Umgehungsluft durch die hinteren Lüftungsöffnungen 18 in das Innere des Gerätegehäuses 8 ein. Wie nachfolgend im Detail beschrieben strömt die Luft zum Kühlen durch die Spuleneinrichtungen 1, 2 und insbesondere durch die ersten und zweiten Spulenringe 3, 4. Die Luftströmung tritt schließlich durch die vorderen Lüftungsöffnungen 19 wieder aus dem Gerätegehäuse 8 heraus.

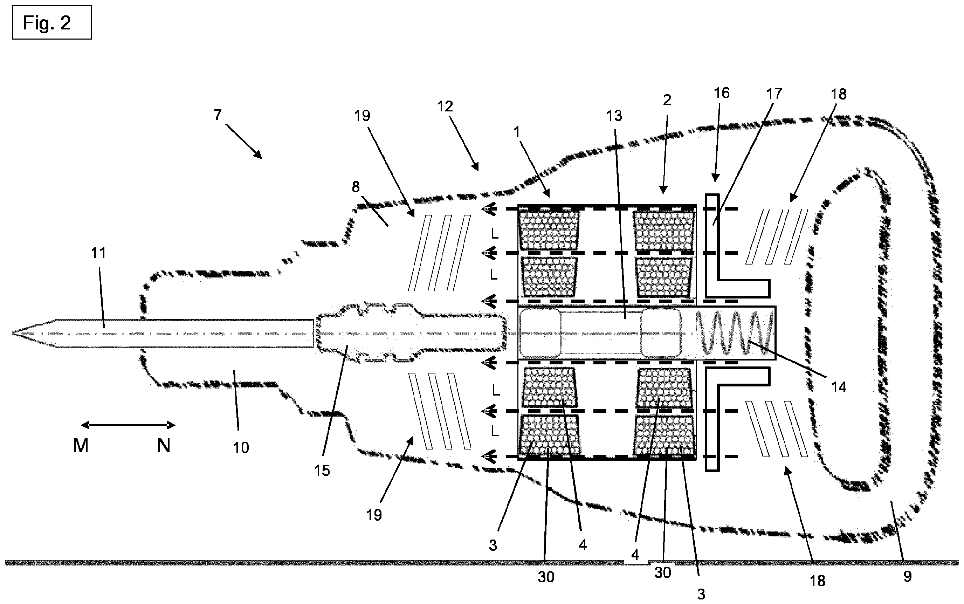

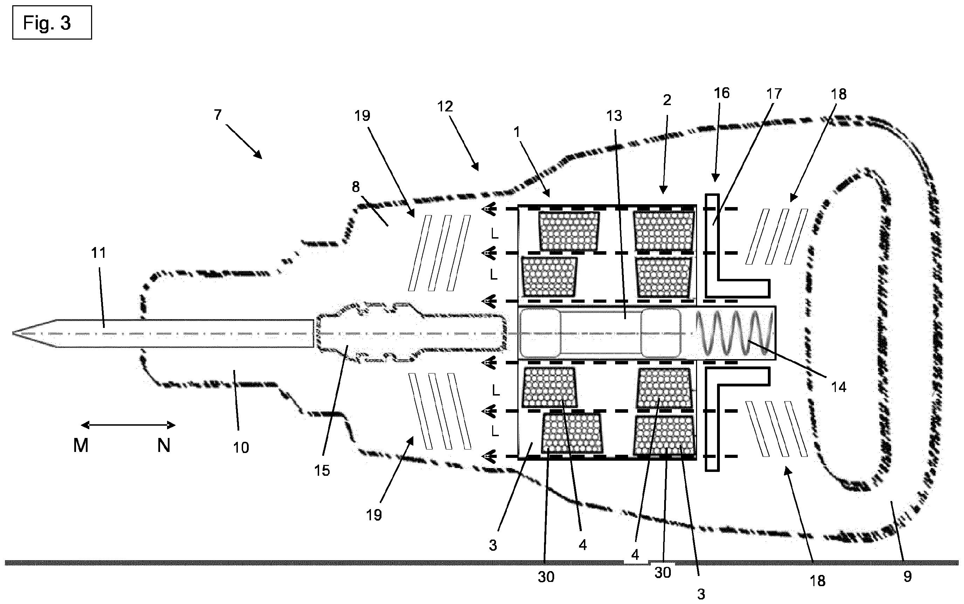

In den Figuren 2 und 3 ist die erste bzw. zweite Spuleneinrichtung 1, 2 als Bestandteil des Schlagwerks 12 im Inneren der als Meißelhammer ausgestalteten Werkzeugmaschine 11 dargestellt.

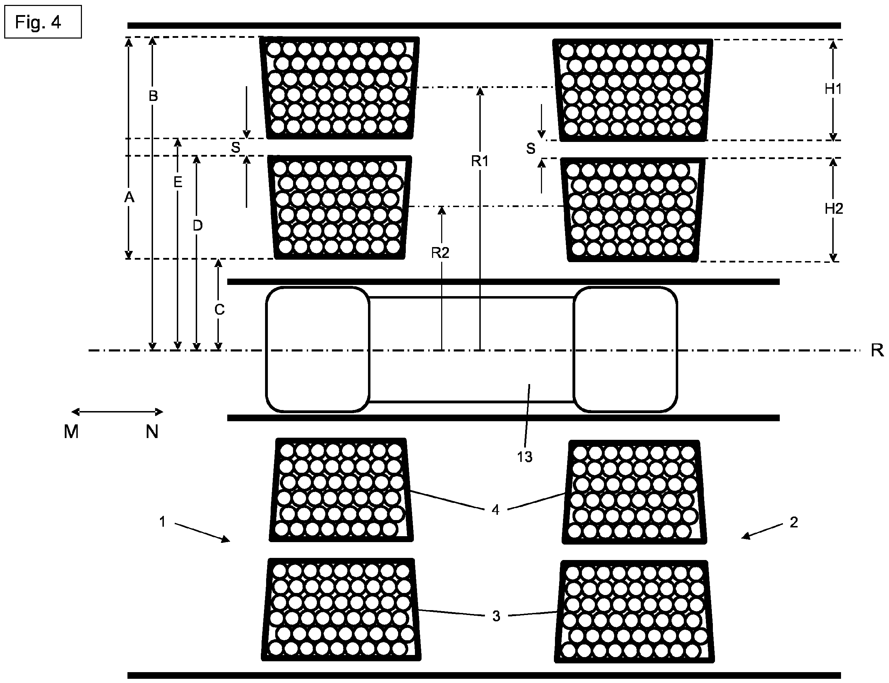

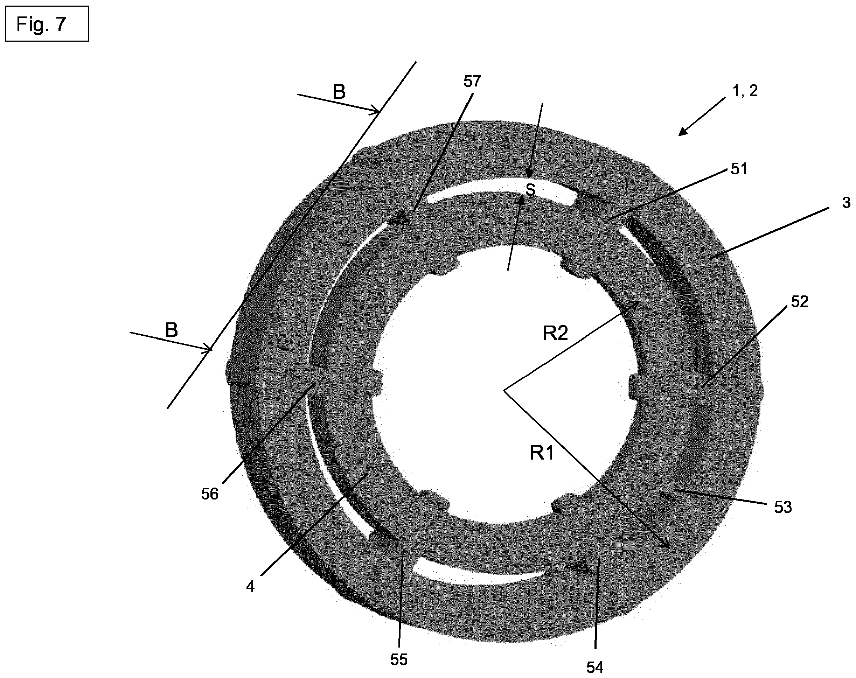

Figur 2 und 4 zeigt die ersten und zweite Spuleneinrichtung 1, 2 gemäß einer ersten Ausgestaltungsform. Jede Spuleneinrichtung 1, 2 enthält einen ersten Spulenring 3 und einen zweiten Spulenring 4. Sowohl der erste als auch der zweite Spulenring 3, 4 sind kreisförmig ausgestaltet. Der erste Spulenring 3 weist einen ersten Radius R1 und der zweite Spulenring 4 weist einen zweiten Radius R2 auf, vgl. Fig. 4 und 7. Der Radius R1 verläuft von der Achse R bis ungefähr der Mitte des ersten Spulenrings 3 und der Radius R2 verläuft von der Achse R bis ungefähr der Mitte des zweiten Spulenrings 4.

Gemäß der ersten Ausgestaltungsform ist die erste und zweite Spuleneinrichtung 1, 2 im Wesentlichen identisch ausgestaltet sind, d.h. bei der ersten und zweiten Spuleneinrichtung 1, 2 ist die Querschnittsfläche Q3 des ersten Spulenrings 3 im Wesentlichen genauso groß wie die Querschnittsfläche Q4 des zweiten Spulenrings 4. Darüber hinaus ist der erste und zweite Spulenring 3, 4 in einer Ebene zueinander positioniert. Diese Ebene verläuft dabei im Wesentlichen vertikal. Der zweite Spulenring 4 befindet sich somit innerhalb des ersten Spulenrings 3.

Gemäß einer weiteren Ausführungsform kann die Spuleneinrichtung 1, 2 auch so ausgestaltet sein, dass der erste und zweite Spulenring 3, 4 nicht in einer vertikalen Ebene zueinander angeordnet ist. Wie in Figur 3 gezeigt, ist bei der ersten Spuleneinrichtung 1 der erste Spulenring 3 in einer Richtung N zu dem zweiten Spulenring 4 versetzt angeordnet. Bei der zweiten Spuleneinrichtung 2 ist jedoch der erste und zweite Spulenring 3, 4 in einer vertikalen Ebene zueinander, d.h. ineinander angeordnet.

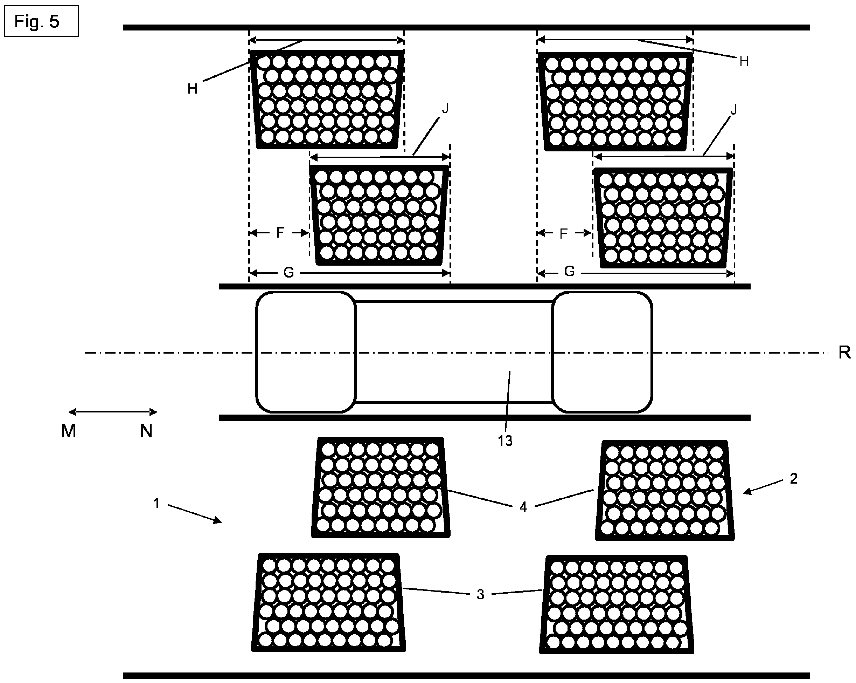

Entsprechend einer in Figur 5 dargestellten weiteren Ausführungsform der Spuleneinrichtung 1, 2 ist es auch möglich, dass der zweite Spulenring 4 der ersten und zweiten Spuleneinrichtung 1, 2 in Richtung N versetzt zu dem ersten Spulenring 3 der ersten und zweiten Spuleneinrichtung 2 angeordnet ist.

Es ist jedoch auch möglich, dass der zweite Spulenring 4 der ersten und zweiten Spuleneinrichtung 1, 2 in Richtung M versetzt zu dem ersten Spulenring 3 der ersten und zweiten Spuleneinrichtung 1, 2 angeordnet ist. Durch die zueinander versetzte Anordnung des ersten und zweiten Spulenrings 3, 4 kann ein im Wesentlich vertikal verlaufender Luftspalt zwischen dem ersten und zweiten Spulenring entstehen, durch den auch von dem Lüfterrad 17 erzeugte Kühlluft L strömen kann.

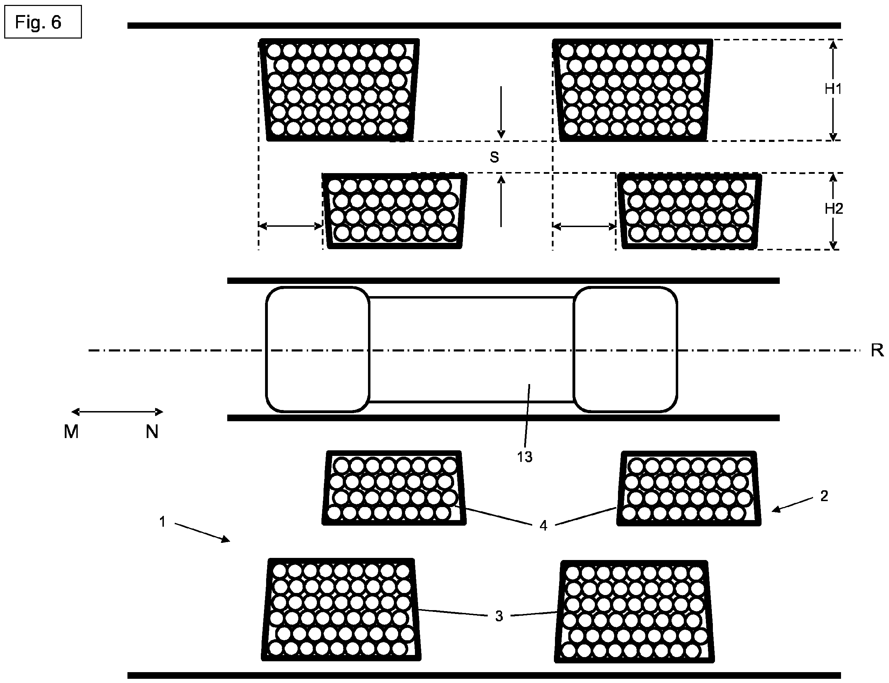

Gemäß einer in Figur 6 gezeigten weiteren Ausführungsform der Spuleneinrichtung 1, 2 ist es auch möglich, dass der zweite Spulenring 4 der ersten und zweiten Spuleneinrichtung 1, 2 in Richtung N versetzt zu dem ersten Spulenring 3 der ersten und zweiten Spuleneinrichtung 1, 2 angeordnet ist und die Querschnittsfläche Q4 des zweiten Spulenrings 4 der ersten und zweiten Spuleneinrichtung 1, 2 kleiner ist als die Querschnittsfläche Q3 des ersten Spulenrings 3 der ersten und zweiten Spuleneinrichtung 1, 2 angeordnet ist.

Entsprechend einer alternativen Ausgestaltungsform ist es auch möglich, dass der erste und/oder zweite Spulenring 3, 4 nicht kreisförmig, sondern polygonförmig oder in jeder anderen geeigneten Form ausgestaltet ist. Es ist dabei auch möglich, dass die Spulenringe 3, 4 eine ovale oder asymmetrische Form aufweisen.

Wie in den Figuren 2 bis 6 dargestellt, enthält jeder Spulenring 3, 4 eine Anzahl an Wicklungen eines elektrisch leitfähigen Drahtes 30. Wie insbesondere in den Figuren 2 und 5 gezeigt, ist der durchgehende Draht 30 in Reihen bzw. Lagen übereinandergelegt. In jedem Spulenring 3, 4 ist der Draht 30 in sechs Reihen gewickelt.

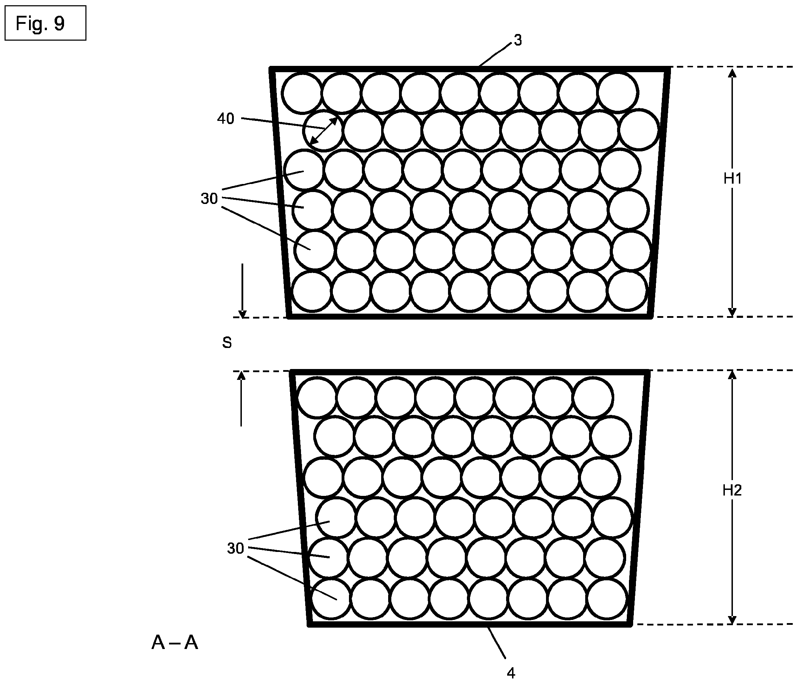

Gemäß einer alternativen Ausgestaltungsform ist es jedoch auch möglich, dass übereinander maximal zwei bis vierzehn Reihen bzw. Wicklungslagen des Drahtes 30 in jedem Spulenring 3, 4 angeordnet sind. Besonders vorteilhaft sind dabei sieben oder acht Wickellagen bzw. Reihen des übereinanderliegenden Drahtes 30. Die Höhe H1 des ersten Spulenrings 3 sowie die Höhe H2 des zweiten Spulenrings 4 können zwei bis zehn Mal dem Durchmesser 40 des Drahtes 30 entsprechen, vgl. Figur 9.

Wie in Fig. 4 dargestellt, ist die Höhe H1, H2 der einzelnen Spulenringe 3, 4 und die Anordnung der einzelnen Spulenringe 3, 4 so ausgestaltet, dass eine Abstand A zwischen einem oberen Ende eines obersten bzw. ersten Spulenrings 3 und einem unteren Ende eines untersten bzw. zweiten Spulenrings 4 größer ist als die Summe der ersten Höhe H1 des obersten bzw. ersten Spulenrings 3 und der zweiten Höhe H2 des untersten bzw. zweiten Spulenrings 4. Hieraus ergibt sich eine Aussparung S zwischen dem ersten und zweiten Spulenring 3, 4. Die Position und Funktion der Aussparung S wird nachfolgend im Detail beschrieben. Wie der Fig. 4 weiterhin entnommen werden kann, ist der Abstand zwischen dem unteren Ende des unteren bzw. zweiten Spulenrings 4 und der Längsachse R mit dem Bezugszeichen C benannt. Der Abstand zwischen dem oberen Ende des unteren bzw. zweiten Spulenrings 4 und der Längsachse R ist mit dem Bezugszeichen D benannt. Die Differenz zwischen Abstand D und C ist die Höhe H2 des unteren bzw. zweiten Spulenrings 4.

Der Abstand A entspricht dadurch der Differenz des Abstands B und C. Darüber hinaus ist der Abstand A stets größer als die Summe der Höhe H1 und H2. Der Abstand A ist ebenso größer als die Summe der Differenz zwischen B und E sowie der Differenz zwischen D und C.

Der Abstand zwischen dem unteren Ende des oberen bzw. ersten Spulenrings 3 und der Längsachse R ist mit dem Bezugszeichen E benannt. Der Abstand zwischen dem oberen Ende des oberen bzw. ersten Spulenrings 3 und der Längsachse R mit dem Bezugszeichen B benannt. Die Differenz zwischen Abstand B und E ist die Höhe H1 des oberen bzw. ersten Spulenrings 3.

Des Weiteren weist der erste Spulenring 3 einen ersten Radius R1 und der zweite Spulenring 4 weist einen zweiten Radius R2 auf. Wie in Fig. 4 und 7 gezeigt, ist der Radius R1 großer als der Radius R2. Der zweite Spulenring 4 ist innerhalb des ersten Spulenrings 3 positioniert. Sowohl der erste als auch der zweite Spulenring 3, 4 befinden sich in derselben Ebene und parallel zueinander.

Wie bereits vorstehend beschrieben ist in Figur 5 eine weitere Ausführungsform der Spuleneinrichtung 1, 2 dargestellt. Der zweite Spulenring 4 der ersten und zweiten Spuleneinrichtung 1, 2 ist um einen Abstand F in Richtung N zu dem ersten Spulenring 3 der ersten und zweiten Spuleneinrichtung 1, 2 versetzt angeordnet. Die Breite G bzw. der Abstand von der linken Seitenkante des ersten Spulenrings 3 zu der rechten Seitenkante des zweiten Spulenrings 4 ist genauso groß wie die Summe der maximalen Breite H des ersten Spulenrings 3 und der maximalen Breite J des zweiten Spulenrings 4. Es ist jedoch auch möglich, dass die Breite G bzw. der Abstand von der linken Seitenkante des ersten Spulenrings 3 zu der rechten Seitenkante des zweiten Spulenrings 4 kleiner ist als die Summe der Breite H des ersten Spulenrings 3 und der Breite J des zweiten Spulenrings 4.

Wie bereits vorstehend beschrieben, zeigt Figur 6 eine mögliche Ausführungsform der Spuleneinrichtung 1, 2, bei der die ersten und zweiten Spulenringe 3, 4 unterschiedliche große Querschnittsflächen Q3, Q4 aufweisen. Im gezeigten Ausführungsbeispiel ist die Querschnittsfläche Q4 der zweiten Spulenringe 4 kleiner als die Querschnittsflächen Q3 der ersten Spulenringe 3. Wie in Figur 6 zu erkennen ist, ist die Höhe H1 der ersten Spulenringe 3 größer als die Höhe H2 der zweiten Spulenringe 4. Die Aussparung S zwischen den Spulenringen 3, 4 ist dadurch vergrößert. Ebenso ist der Abstand zwischen der unteren Kante des zweiten Spulenrings 4 zu der Hülse 5 vergrößert. Hierdurch kann mehr Kühlluft L zwischen den beiden Spulenringen 3, 4 und zwischen dem zweiten Spulenring 4 sowie der Hülse 5 strömen. Die Effektivität der Kühlung wird hierdurch erhöht.

Wie in Fig. 7 dargestellt, ist der zweite Spulenring 4 durch sieben Stege 51, 52, 53, 54, 55, 56, 57 mit dem ersten Spulenring 3 verbunden. Es ist jedoch auch möglich, dass mehr oder weniger als sieben Stege 51, 52, 53, 54, 55, 56, 57 vorgesehen sind, um den zweiten Spulenring 4 mit dem ersten Spulenring 3 zu verbinden. Wenigstens einer der Stege 51, 52, 53, 54, 55, 56, 57 ist so ausgestaltet, dass der Wickeldraht 30 des ersten und zweiten Spulenrings 3, 4 miteinander verbunden ist. Mit anderen Worten: es handelt sich um einen einzigen Wickeldraht 30, der in dem ersten und zweiten Spulenring 3, 4 gewickelt ist. Der wenigstens eine Steg 51, 52, 53, 54, 55, 56, 57 zum Verbinden des ersten und zweiten Spulenrings 3, 4 ist dabei hohl ausgestaltet. In Fig. 4 ist beispielsweise eine Spuleneinrichtung 1, 2 gezeigt, bei der der zweite Spulenring 4 mit lediglich vier Stegen 51, 52, 53, 54 mit dem ersten Spulenring 3 verbunden ist.

Durch die spezielle Anordnung des ersten und zweiten Spulenrings 3, 4 ist zwischen dem ersten und zweiten Spulenring 3, 4 die ringförmige Aussparung S gegeben (vgl. insbesondere Fig. 4, 6 bis 5). Die Form der Aussparung S folgt im Wesentlichen der entsprechenden Innen- und Außenkontur des ersten und zweiten Spulenrings 3, 4. Die Aussparung S ist so ausgestaltet, dass durch sie ein Fluid oder Medium, insbesondere ein Luftstrom L, zum Kühlen der Spuleneinrichtung 1, 2 strömen kann. Die Kühlung der Spuleneinrichtung 1, 2 basiert dabei auf dem Prinzip der Konvektion. Der Luftstrom L kann auch als Konvektionsstrom bezeichnet werden. Die Aufteilung der Spuleneinrichtung 1, 2 in wenigstens einen ersten und zweiten Spulenring 3, 4 verhindert somit zum einen, dass zu viele wärmeerzeugende Drahtwicklungen 30 übereinanderliegen und es zu einer zu hohen Wärmeentwicklung im Inneren der Spuleneinrichtung 1, 2 kommt. Zum anderen ist eine ringförmige Aussparung S zwischen den einzelnen Spulenringen 3, 4 möglich, die Kühlluft L zum Kühlen der Spuleneinrichtung 1, 2 durch die einzelnen Spulenringe 3, 4 strömen lässt.

Der Luftstrom L durch die Aussparung S und entlang den einzelnen Spulenringen 3, 4 verringert die Wärmeentwicklung und verhindert effizient eine Überhitzung der Spuleneinrichtung 1, 2.

## Patentansprüche

1. Werkzeugmaschine (1), insbesondere Bohr- und/oder Meißelhammer, enthaltend
- ein Schlagwerk (12) mit einem Schlagkörper (13) zum Erzeugen eines Schlagimpulses auf ein Werkzeug (11), der mit Hilfe eines Magnetfeldes zum Erzeugen des Schlagimpulses entlang einer Längsachse (R) reversibel verschiebbar ist; und
- wenigstens eine erste und zweite Spuleneinrichtung (1, 2) zum Erzeugen des Magnetfeldes
**dadurch gekennzeichnet, dass** jede Spuleneinrichtung (1, 2) wenigstens einen ersten Spulenring (3) mit einem ersten Radius (R1) und einen zweiten Spulenring (4) mit einem zweiten Radius (R2) enthält, wobei der erste Radius (R1) des ersten Spulenrings (3) größer ist als der zweite Radius (R2) des zweiten Spulenrings (4), sodass zwischen dem wenigstens ersten und zweiten Spulenring (3, 4) mindestens teilweise eine Aussparung (S) vorgesehen ist, durch die ein Fluid (L), insbesondere ein Luftstrom, zum Kühlen der Spuleneinrichtung (1, 2) strömen kann, wobei die einzelnen Spulenringe (3, 4) so zueinander angeordnet sind, dass ein Abstand (A) zwischen einem oberen Ende eines obersten Spulenrings (3) und einem unteren Ende eines untersten Spulenrings (4) größer ist als die Summe der ersten Höhe (H1) des obersten Spulenrings (3) und der zweiten Höhe (H2) des untersten Spulenrings (4).

2. Werkzeugmaschine (1) nach Anspruch 1,
**dadurch gekennzeichnet, dass** die Spuleneinrichtung (1, 2) mehr als ein erster und zweiter Spulenring (3, 4) mit entsprechenden wenigstens teilweise zwischen den einzelnen Spulenringen (3, 4) vorhandenen Aussparungen (S) enthält.

3. Werkzeugmaschine (1) nach Anspruch 1 oder 2,
**dadurch gekennzeichnet, dass** der wenigstens erste und zweite Spulenring (3, 4) in einer vertikalen Ebene angeordnet ist.

4. Werkzeugmaschine (1) nach Anspruch 1 bis 3,
**dadurch gekennzeichnet, dass** jeder Spulenring (3, 4) maximal zwei bis vierzehn Wicklungslagen, vorzugsweise sieben oder acht Wicklungslagen, eines Stromleiters (30) enthält.

5. Werkzeugmaschine (1) nach wenigstens einem der Ansprüche 1 bis 4,
**dadurch gekennzeichnet, dass** die Aussparung zwischen dem wenigstens ersten und zweiten Spulenring (3, 4) eine Höhe (S) von 2 bis 10 mm aufweist.

## Claims

1. A power tool (1), in particular a hammer drill and/or a chisel hammer drill, containing
- a percussive mechanism (12) having a percussive element (13) for generating a percussive pulse onto a tool (11), which element is reversibly movable along a longitudinal axis (R) by means of a magnetic field in order to generate the percussive pulse; and
- at least a first and second coil device (1, 2) for generating the magnetic field,
**characterized in that** each coil device (1, 2) contains at least a first coil ring (3) having a first radius (R1) and a second coil ring (4) having a second radius (R2), the first radius (R1) of the first coil ring (3) being greater than the second radius (R2) of the second coil ring (4), so that a space (S) is provided at least in part between the at least first and second coil ring (3, 4), through which space a fluid (L), in particular an air flow, can flow in order to cool the coil device (1, 2), the individual coil rings (3, 4) being arranged relative to one another such that a distance (A) between an upper end of an uppermost coil ring (3) and a lower end of a lowermost coil ring (4) is greater than the sum of the first height (H1) of the uppermost coil ring (3) and the second height (H2) of the lowest coil ring (4).

2. The power tool (1) according to claim 1,
**characterized in that** the coil device (1, 2) contains more than a first and second coil ring (3, 4) having corresponding spaces (S) that are present at least in part between the individual coil rings (3, 4).

3. The power tool (1) according to either claim 1 or claim 2,
**characterized in that** the at least first and second coil ring (3, 4) is arranged in a vertical plane.

4. The power tool (1) according to claims 1 to 3,
**characterized in that** each coil ring (3, 4) has a maximum of two to fourteen winding layers, preferably seven or eight winding layers, for an electric conductor (30).

5. The power tool (1) according to at least one of claims 1 to 4,
**characterized in that** the space between the at least first and second coil ring (3, 4) has a height (S) of 2 to 10 mm.

## Revendications

1. Machine-outil (1), en particulier marteau perforateur et/ou marteau burineur, contenant
- un mécanisme de percussion (12) comportant un corps de percussion (13) pour la production d'une impulsion de percussion sur un outil (11) qui peut être déplacé de manière réversible le long d'un axe longitudinal (R) au moyen d'un champ magnétique permettant de produire l'impulsion de percussion ; et
- au moins un premier et un second dispositif de bobine (1, 2) permettant de produire le champ magnétique
**caractérisée en ce que** chaque dispositif de bobine (1, 2) contient au moins une première bague de bobine (3) comportant un premier rayon (R1) et une seconde bague de bobine (4) comportant un second rayon (R2), le premier rayon (R1) de la première bague de bobine (3) étant plus grand que le second rayon (R2) de la seconde bague de bobine (4), de sorte qu'un évidement (S) est prévu au moins partiellement entre les au moins première et seconde bagues de bobine (3, 4), à travers lequel évidement un fluide (L), en particulier un flux d'air, peut s'écouler pour le refroidissement du dispositif de bobine (1, 2), les différentes bagues de bobine (3, 4) étant disposées l'une par rapport à l'autre de telle sorte qu'une distance (A) entre une extrémité supérieure d'une bague de bobine la plus haute (3) et une extrémité inférieure d'une bague de bobine la plus basse (4) est supérieure à la somme de la première hauteur (H1) de la bague de bobine la plus haute (3) et de la seconde hauteur (H2) de la bague de bobine la plus basse (4).

2. Machine-outil (1) selon la revendication 1,
**caractérisée en ce que** le dispositif de bobine (1, 2) contient plus d'une première et d'une seconde bague de bobine (3, 4) avec des évidements (S) correspondants prévus au moins partiellement entre les différentes bagues de bobine (3, 4).

3. Machine-outil (1) selon la revendication 1 ou 2,
**caractérisée en ce que** les au moins première et seconde bagues de bobine (3, 4) sont disposées dans un plan vertical.

4. Machine-outil (1) selon la revendication 1 à 3,
**caractérisée en ce que** chaque bague de bobine (3, 4) contient au plus deux à quatorze couches d'enroulement, de préférence sept ou huit couches d'enroulement, d'un conducteur de courant (30).

5. Machine-outil (1) selon au moins l'une des revendications 1 à 4,
**caractérisée en ce que** l'évidement entre les au moins première et seconde bagues de bobine (3, 4) présente une hauteur (S) de 2 à 10 mm.
